# EUROPÄISCHE PATENTSCHRIFT

(11) **EP 2 379 385 B1**
(45) Veröffentlichungstag und Bekanntmachung des Hinweises auf die Patenterteilung: **03.10.2012**
(21) Anmeldenummer: 09748706.0
(22) Anmeldetag: 23.10.2009
(51) Int. Cl.: B60T 11/34

(54) **KOMBINIERTES DRUCKBEGRENZUNGS- UND ÜBERSTRÖMERVENTIL**
COMBINED PRESSURE-LIMITING AND OVERFLOW VALVE
SOUPAPE DE LIMITATION DE PRESSION ET DE DÉCHARGE COMBINÉE

(30) Priorität: 19.12.2008 DE 102008063819
(43) Veröffentlichungstag der Anmeldung: 26.10.2011
(73) Patentinhaber: WABCO GmbH, 30453 Hannover (DE)
(72) Erfinder: DIEKMEYER, Heinrich, 30890 Barsinghausen (DE); EGGEBRECHT, Detlev, 30519 Hannover (DE)
(86) Internationale Anmeldenummer: PCT/EP2009/007589
(87) Internationale Veröffentlichungsnummer: WO 2010/069426

(56) Entgegenhaltungen:
- EP-A- 0 659 621
- DE-A1- 4 114 977
- FR-A- 2 341 087
- FR-A- 2 350 235

## Beschreibung

Die Erfindung betrifft ein Druckbegrenzungs- und ein Überströmerventil, welche baulich in einer Ventileinheit zusammengefasst sind und im Weiteren unter dem Begriff "kombiniertes Druckbegrenzungs- und Überströmerventil" geführt werden.

Ein solches kombiniertes Druckbegrenzungs- und Überströmerventil findet insbesondere Anwendung in einer konventionellen Luftaufbereitungsanlage ("APU": Air Processing Unit) oder in einer sogenannten elektronischen Luftaufbereitungsanlage ("E-APU": Electronic Air Processing Unit) eines Nutzfahrzeugs. Darüber hinaus kann das erfindungsgemäße kombinierte Druckbegrenzungs- und Überströmerventil auch in sonstigen pneumatischen Geräten eingesetzt werden, bei denen Druckbegrenzungs- und Überströmerventil in Reihe geschaltet sind.

Aus der EP 0659621 A1 ist eine Druckbegrenzungseinrichtung bekannt, welche im Falle einer Undichtigkeit zwischen der Schaltkammer und der Druckabbaukammer wenigstens die Aufrechterhaltung eines Notdrucks in der Druckmittelanlage sicherstellt.

Eine Luftaufbereitungsanlage (APU bzw. E-APU) trocknet und reinigt die von einem Kompressor geförderte Druckluft und versorgt damit die Druckluftverbraucherkreise im Fahrzeug (z. B. die pneumatischen Bremskreise oder eine Liftachssteuerung). Außerdem regelt die Luftaufbereitungsanlage die Drücke in den Druckluftverbraucherkreisen in vorgebbaren Grenzen, die seitens des Fahrzeugherstellers definiert werden. Diese Druckregelung geschieht unter Verwendung von Druckbegrenzungsventilen und von Überströmerventilen.

In einem Nutzfahrzeug werden üblicherweise mehrere Druckluftverbraucherkreise verwendet. Es sind erste Druckluftverbraucherkreise (z. B. die pneumatischen Bremskreise des Zugfahrzeugs) vorhanden, welche mit dem durch den Kompressor bereitgestellten Systemdruck (z. B. 12,5 bar) betrieben werden. Diese ersten Druckluftverbraucherkreise werden auch "Hochdruck-Kreise" genannt. Des Weiteren sind auch zweite Druckluftverbraucherkreise (z. B. für den Anhängerbremskreis, eine pneumatisch betriebene Getriebeschaltung oder für einen Handbremskreis) vorhanden, welche nicht mit dem üblichen, durch den Kompressor bereitgestellten Systemdruck (z. B. 12,5 bar) betrieben werden dürfen. Diese zweiten Druckluftverbraucherkreise werden üblicherweise mit einem niedrigeren Druck (z. B. 8,5 bar) betrieben. Hierzu wird ein Druckbegrenzungsventil verwendet, um den Druck für diese zweiten Druckluftverbraucherkreise auf einen definierten Maximaldruck (z. B. 8,5 bar) zu begrenzen. Dieses Druckbegrenzungsventil ist üblicherweise so ausgelegt, dass der Druck das Druckbegrenzungsventil gegen die Kraft einer einstellbaren Feder (Einstellfeder) schließt.

Üblicherweise wird der Druck für die Druckluftverbraucherkreise, welche mit dem Systemdruck (z. B. 12,5 bar) betrieben werden, mittels eines (mechanischen) Reglers, dem sogenannten "Governor", oder mittels einer Elektronik (über Drucksensoren in den Druckluftverbraucherkreisen und über Magnetventile) geregelt. Hierbei erkennt der Regler bzw. die Elektronik, dass der maximale Druck erreicht wurde, woraufhin über ein Steuersignal der Kompressor abschaltet wird, so dass er nicht mehr fördert.

Beim Verteilen der Druckluft in die Druckluftverbraucherkreise werden vor die druckbegrenzten zweiten Druckluftverbraucherkreise ein oder mehrere Druckbegrenzungsventile eingefügt. Die Luft kann dabei hinter einem Druckbegrenzungsventil auf mehrere Druckluftverbraucherkreise aufgeteilt werden, die jeweils durch ein Überströmerventil geschützt sind. Damit ist der Druck in diesen zweiten Druckluftverbraucherkreisen auf den gleichen maximalen Wert begrenzt.

Die Überströmerventile dienen dazu, die zweiten Druckluftverbraucherkreise gegeneinander abzusichern. Sie öffnen erst oberhalb eines über eine einstellbare Feder (Einstellfeder) definierten Druckes (Öffnungsdruck). Erst bei einem niedrigeren Druck (Schließdruck) schließen die Überströmerventile wieder. Damit wird sichergestellt, dass im Falle, dass ein Druckluftverbraucherkreis defekt ist (Kreisabriss oder Leckage), die übrigen Druckluftverbraucherkreise immer noch bis zum Öffnungsdruck des defekten Druckluftverbraucherkreises mit Druckluft versorgt werden. Somit bleibt das Fahrzeug weiterhin, zumindest eingeschränkt, fahrbereit.

In heutigen Luftaufbereitungsanlagen wird jedes Druckbegrenzungsventil und jedes Überströmerventil als ein separates Ventil ausgeführt, das über jeweils eine eigene einstellbare Feder verfügt. So lässt sich jedes Ventil unabhängig auf den gewünschten Druckwert (Öffnungsdruck/Schließdruck) einstellen. Eine Wechselwirkung zwischen dem Druckbegrenzungsventil und dem Überströmerventil wird dadurch vermieden.

Weiterhin hat jedes dieser Ventile einen eigenen Kolben, Dichtung, Feder, Federkappen, Einstellschraube, Deckel und weitere Teile.

Durch die Verwendung eines Druckbegrenzungsventils und eines Überströmerventils wird also ein Druckbereich definiert in welchem der Kompressor in einen Druckluftverbraucherkreis fördert. Beispielsweise beginnt bei einem einzustellenden Druck von 8,5 bar in einem zweiten Druckluftverbraucherkreis der Kompressor unterhalb eines Drucks von 7,5 bar zu fördern, während er bei Erreichen eines Drucks von 8,5 bar abgeschaltet wird. Das Druckbegrenzungsventil und das Überströmerventil werden also mittels der einstellbaren Federn so eingestellt, dass sie bei 7,5 bar öffnen bzw. bei 8,5 bar schließen. Somit wird also durch die beiden Ventile ein Druckbereich von 7,5 bar bis 8,5 bar definiert in welchem der Kompressor für diesen zweiten Druckluftverbraucherkreis eingeschaltet wird. Nun ist es leider nahezu unmöglich die Ventile reproduzierbar auf exakt dieselben Öffnungs- bzw. Schließdrücke einzustellen. Es werden also üblicherweise Toleranzbereiche festgelegt, in welchen das jeweilige Ventil als geeignet für den Einsatzzweck angesehen wird. Bezüglich eines Ventils mit einem Öffnungsdruck von nominal 7,5 bar würde beispielsweise ein Ventil, welches einen Öffnungsdruck innerhalb des Druckbereichs von 7,3 bar bis 7,7 bar aufweist, als geeignet angesehen. Bei Zugrundelegung eines ähnlichen Toleranzbereichs würde also der Schließdruck im Bereich 8,3 bar bis 8,7 bar liegen.

Üblicherweise erfolgt in einem Nutzfahrzeug eine priorisierte Befüllung der einzelnen Druckluftverbraucherkreise, wobei es gesetzlich vorgeschrieben ist, die Betriebsbremskreise vor dem Feststellbremskreis zu befüllen, damit ein sicheres Abbremsen des Fahrzeugs jederzeit möglich ist. Erst danach werden die übrigen (zweiten) Druckluftverbraucherkreise befüllt. Hierbei wird eine Reihenfolge der Befüllung der übrigen (zweiten) Druckluftverbraucherkreise fahrzeugseitig festgelegt. Diese Reihenfolge ist unter anderem abhängig von den Wünschen des Fahrzeugherstellers, welche für seine Fahrzeuge oder auch nur für einzelne Baugruppen eine bestimmte Reihenfolge der Befüllung festlegt. Beispielsweise werden die übrigen Druckluftverbraucherkreise in der Reihenfolge
- Anhängerbremskreis
- Handbremskreis
- pneumatisch betriebene Getriebeschaltung
befüllt. Diese beispielhaften drei Druckluftverbraucherkreise werden alle nominell mit einem Druck von 8,5 bar versorgt. Damit diese Befüllungsreihenfolge eingehalten werden kann, muss das Überströmerventil des Anhängerbremskreises vor dem Überströmerventil des Handbremskreises und der Getriebeschaltung öffnen. Hierzu wird das Überströmerventil beispielsweise auf einen Öffnungsdruck von nominell 7,0 bar eingestellt, während das Überströmerventil des Handbremskreises auf nominell 7,2 bar und das Überströmerventil der Getriebeschaltung auf nominell 7,5 bar eingestellt wird. Diese Überströmerventile weisen aber jeweils, wie oben beschrieben, einen Toleranzbereich von ca. +/- 0,2 bar auf, was dazu führen kann, dass sich die Bereiche möglicher Öffnungsdrücke der Überströmerventile überschneiden können, was dazu führen kann, dass die eigentlich gewünschte Befüllungsreihenfolge dieser drei Druckluftverbraucherkreise sich verändern kann. Eine solche Veränderung kann beispielsweise auf Grund von Alterungsprozessen und/oder Materialermüdungen der verwendeten einstellbaren Federn erfolgen, wodurch sich der Öffnungsdruck des jeweiligen Überströmerventils im Laufe der Zeit verändern kann. Dies gilt analog natürlich auch für den Schließdruck des Überströmerventils und für den Öffnungs- und Schließdruck des Druckbegrenzungsventils.

Daher ist es die Aufgabe der vorliegenden Erfindung, ein Überströmerventil und ein Druckbegrenzungsventil bereitzustellen, welche geringe Toleranz aufweisen.
Diese Aufgabe wird durch das kombinierte Druckbegrenzungs- und Überströmerventil gemäß Patentanspruch 1 gelöst.

Die bisher üblichen kombinierten Druckbegrenzungs- und Überströmerventile wurden üblicherweise funktional getrennt aufgebaut, auch wenn sie in einer gemeinsamen Ventileinheit baulich kombiniert werden. Das erfindungsgemäße kombinierte Druckbegrenzungs- und Überströmerventil hingegen bildet sowohl baulich als auch funktional eine Einheit.

Ein Vorteil des erfindungsgemäßen kombinierten Druckbegrenzungs- und Überströmerventils besteht darin, dass durch diese Kombination Bauteile, z. B. eine zweite Feder, eingespart werden konnten, wodurch einerseits Kosten und andererseits auch Bauraum/Gewicht eingespart werden konnte. Hierdurch kann die Luftaufbereitungsanlage kleiner und leichter ausgeführt werden, wodurch sowohl Material, z. B. für das Gehäuse, als auch Kosten, z. B. Montagekosten aufgrund der nun wenigeren Teile, eingespart werden können. Außerdem wurde die Anzahl der herzustellenden Druckluftwege zwischen den vormals getrennten Druckbegrenzungs- und Überströmerventil eingespart, wodurch wiederum Kosten, z. B. für die Erstellung dieser Druckluftwege, entfallen sind.

Ein weiterer Vorteil der Erfindung besteht darin, dass das kombinierte Druckbegrenzungs- und Überströmerventil nur noch eine einzustellende Feder (Einstellfeder) für den Öffnung- und Schließdruck aufweist, wodurch sich auch hier Kosten für die Einstellungsarbeiten einsparen lassen.

Insbesondere bei Anwendungen, bei denen der Öffnungs- (und Schließ-)Druck des Überströmerventils dicht unterhalb des Druckes liegen soll, bei dem das Druckbegrenzungsventil schließt, bietet das erfindungsgemäße kombinierte Druckbegrenzungs- und Überströmerventil einen Vorteil gegenüber einer herkömmlichen Lösung, da bei der erfindungsgemäßen Lösung die Arbeitspunkte des Druckbegrenzungs- und des Überströmerventils nur durch eine einzige Einstellfeder eingestellt werden. Diese Einstellfeder kann zwar auch im Laufe der Zeit ermüden, wodurch sich die Arbeitspunkte des Druckbegrenzungs- und des Überströmerventils verschieben können, aber der Abstand zwischen diesen beiden Arbeitspunkten bleibt im Wesentlichen gleich. Hierdurch ist gewährleistet, dass sich die Toleranzbereiche dieser beiden Ventilarbeitsbereiche nicht überschneiden.
In einer bevorzugten Ausführungsform der Erfindung weist die Einstellfeder ein- oder beidseitig angeordnete Federkappen auf, welche zur Kraftzentrierung dienen. Hierdurch wird ein Verkippen der Feder innerhalb des kombinierten Druckbegrenzungs- und Überströmerventils verhindert.

In einer weiteren bevorzugten Ausführungsform der Erfindung können anstelle der Einstellschraube auch Distanzscheiben verwendet werden, welche, je nach Dicke, ein exaktes Einstellen der Einstellfeder ermöglichen.

In einer weiteren bevorzugten Ausführungsform der Erfindung kann anstelle der Einstellschraube auch ein Einsatz und das Gehäuse des kombinierten Druckbegrenzungs- und Überströmerventils gegeneinander beweglich angeordnet sein, beispielsweise mittels eines Gewindes. Je nachdem wie weit also der Einsatz in das Gehäuse hineingeschraubt wird, desto stärker wird die Einstellfeder vorgespannt bzw. eingestellt.

In einer weiteren bevorzugten Ausführungsform ist das Gehäuse oder der Deckel oder ein Einsatz im Gehäuse bzw. Deckel so ausgestaltet, dass dieses/r mit einem Kolben bzw. mit einem Hauptkolben oder mit einem Ring einen Überströmerventilsitz bildet.

In einer weiteren bevorzugten Ausführungsform ist das Gehäuse oder der Deckel oder ein Einsatz im Gehäuse bzw. Deckel so ausgestaltet, dass dieses/r mit einem ersten Ventilkörper oder mit einem Kolben bzw. mit einem Hauptkolben einen Druckbegrenzungsventilsitz bildet.

In einer weiteren bevorzugten Ausführungsform ist im Gehäuse oder im Deckel ein Einsatz vorgesehen, welcher einen Teil eines Überströmerventilsitzes und/oder einen Teil eines Druckbegrenzungsventilsitzes bildet. Vorteilhafterweise ist der Einsatz im Gehäuse oder im Deckel eingeklebt, eingepresst, mittels eines Gewindes eingeschraubt oder an einer Stufe im Gehäuse oder Deckel mittels eines Sicherungsringes fixiert.

In einer weiteren bevorzugten Ausführungsform ist der Einsatz verstellbar im Gehäuse oder im Deckel angebracht, beispielsweise über eine Gewindeverbindung. Durch diesen einstellbaren Einsatz kann der Hub des Druckbegrenzungsventilsitzes eingestellt werden. Alternativ kann auch der Überströmerventilsitz einstellbar ausgeführt sein.

Bevorzugt wird ein Kolben aus Kunststoff verwendet. Der Kolben kann hierbei als Spritzgussteil hergestellt werden, wodurch Kosten eingespart werden können.

In einer weiteren bevorzugten Ausführungsform wird als Kolben ein zweiteiliger Kolben verwendet, welcher einen Hauptkolben und einen Ring umfasst. Der Hauptkolben und der Ring können entweder fest miteinander verbunden sein, z. B. durch Verkleben, oder gegeneinander verkippbar, also schwimmend, gelagert sein.

Hierdurch können eventuelle Unebenheiten an den Ventilsitzen ausgeglichen werden. Vorteilhafterweise wird eine verkippbare Lagerung durch Verwendung eines elastischen Elements, z. B. eines O-Rings oder einer anderen Form- bzw. Profildichtung, zwischen dem Hauptkolben und dem Ring sichergestellt. Dieses elastische Element kann vorteilhafterweise gleichzeitig zur Abdichtung zwischen dem Hauptkolben und dem Ring dienen.

In einer weiteren bevorzugten Ausführungsform weist der Kolben bzw. Hauptkolben einen Entlüftungskanal auf, welcher eine Verbindung zwischen einem ersten Druckraum und einem zweiten Druckraum herstellt, wobei der erste Druckraum mit einer Eingangsöffnung verbindbar ist, während der zweite Druckraum mit der Atmosphäre verbunden ist. Dieser Entlüftungskanal ist mittels eines ersten Ventilkörpers verschließbar, wodurch die Funktion eines Entlüftungsventils ebenfalls in das kombinierte Druckbegrenzungs- und Überströmerventil integriert wird. Der Kolben bzw. der Hauptkolben und der ersten Ventilkörper bildet somit den Entlüftungsventilsitz des Entlüftungsventils.

In einer weiteren bevorzugten Ausführungsform weist der mit einem Entlüftungskanal versehene Kolben bzw. Hauptkolben Stege auf, auf denen eine Federkappe derart aufliegt, dass zwischen Kolben bzw. Hauptkolben und Federkappe ein Durchgang für die zu entlüftende Druckluft besteht. Alternativ kann auch die Federkappe in dem Bereich, wo sie mit dem Entlüftungskanal in Verbindung steht, eine Öffnung aufweisen, so dass ein Durchgang für die zu entlüftende Druckluft besteht. Diese Öffnung kann beispielsweise durch eine Bohrung, Stanzung oder Perforierung hergestellt sein.

In einer weiteren bevorzugten Ausführungsform ist der Kolben bzw. Hauptkolben mittels einer Dichtung, z. B. einem O-Ring oder einer anderen Form- bzw. Profildichtung, gegen das Gehäuse bzw. gegen den Deckel abgedichtet.

In einer weiteren bevorzugten Ausführungsform ist zwischen dem Gehäuse und einem zweiten Ventilkörper ein Rückschlagventilsitz ausgebildet, wobei der zweite Ventilkörper mittels einer weiteren Feder und ggf. über den ersten Ventilkörper über den Kolben bzw. Hauptkolben und über die Einstellfeder gegen den Deckel derart abgestützt ist, dass in der Ruhestellung des Kolbens bzw. Hauptkolbens der Rückschlagventilsitz geschlossen ist.

In einer weiteren bevorzugten Ausführungsform weist das Gehäuse einen Gehäuseentlüftungskanal auf, wobei dieser Gehäuseentlüftungskanal in der Ruhestellung des Kolbens durch einen Entlüftungseinsatz verschlossen ist. Der Entlüftungseinsatz bildet mit dem Gehäuse einen Gehäuseentlüftungsventilsitz. Der Entlüftungseinsatz ist gegen das Gehäuse abgedichtet, beispielsweise mittels eines elastomeren O-Rings oder mittels einer elastischen Membran. Die Membran bietet gegenüber dem O-Ring den Vorteil, dass die Reibung zwischen dem Entlüftungseinsatz und dem Gehäuse stark verringert wird.

In einer weiteren bevorzugten Ausführungsform weist der Überströmerventilsitz und/oder der Druckbegrenzungsventilsitz und/oder der Entlüftungsventilsitz und/oder der Rückschlagventilsitz eine einseitige Beschichtung auf, welche eine verbesserte Abdichtung des betreffenden Ventilssitzes ermöglicht. Als Material für die Beschichtung wird vorteilhafterweise ein Elastomer verwendet, welches beispielsweise als separates Bauteil auf dem betreffenden Ventilsitz befestigt werden kann oder das Elastomer wird auf den betreffenden Ventilsitz aufvulkanisiert. Hierbei kann der Überströmerventilsitz und/oder der Druckbegrenzungsventilsitz und/oder der Entlüftungsventilsitz und/oder der Rückschlagventilsitz eine Beschichtung aus jeweils demselben Elastomer oder aus unterschiedlichen Elastomeren aufweisen.

In einer weiteren bevorzugten Ausführungsform ist parallel zur ersten Ausgangsöffnung eine zweite Ausgangsöffnung für einen weiteren Druckluftverbraucherkreis vorgesehen, wobei diese zweite Ausgangsöffnung in der Ruhestellung des Kolbens bzw. Hauptkolbens mit dem ersten Druckraum verbunden ist.

In einer weiteren bevorzugten Ausführungsform wird ein zweistufiger Druckbegrenzer verwendet. Hierzu wird ein dritter Ventilkörper mittels sogenannter Führungsrippen auf dem Kolben axial verschiebbar angebracht. Dieser zweistufige Druckbegrenzer hat den Vorteil, dass hierbei über einen Hilfsdruckbegrenzungsventilsitz, welcher einen kleineren Durchmesser, d. h. eine kleinere Nennweite als ein Druckbegrenzungsventilsitz aufweist, eine hohe Nachfüllempfindlichkeit erreicht wird, da beim Nachfüllen meist nur der Hilfsdruckbegrenzungsventilsitz öffnet während der Druckbegrenzungsventilsitz geschlossen bleibt. Wird hingegen ein hoher Nachfülldruck benötigt, z. B. beim Erstbefüllen eines Druckluftverbraucherkreises, so wird das Druckbegrenzungsventil geöffnet, welches auf Grund seiner größeren Nennweite ein schnelleres Befüllen des Druckluftverbraucherkreises ermöglicht.

Gemäß der Erfindung wird unter dem Begriff "Ruhestellung" die Stellung des Kolbens bzw. Hauptkolbens in dem kombinierten Druckbegrenzungs- und Überströmerventils gemeint, in welcher an der Eingangsöffnung kein Druck anliegt, wodurch im Wesentlichen nur die Federkraft der Einstellfeder eine Kraft auf den Kolben bzw. Hauptkolben ausübt. Somit ist in der Ruhestellung durch die Federkraft der Einstellfeder der Überströmerventilsitz geschlossen, während der Druckbegrenzungsventilsitz geöffnet ist. Ist zusätzlich in dem kombinierten Druckbegrenzungs- und Überströmerventil ein Entlüftungsventil mit einer weiteren Feder vorgesehen, so ist die weitere Feder so ausgelegt, dass auch dann in der Ruhestellung der Überströmerventilsitz geöffnet ist während der Druckbegrenzungsventilsitz geschlossen ist.

Es wird zwar gemäß der vorliegenden Erfindung von einem Öffnungsdruck des Druckbegrenzungsventils bzw. des Druckbegrenzungsventilsitzes gesprochen, aber es versteht sich von selbst, dass der Öffnungsdruck hierbei abhängig von den jeweiligen Druckverhältnissen an der Eingangsöffnung und an der Ausgangsöffnung, die zu den nachgeschalteten Druckluftverbraucherkreisen führt, ist. Der nachfolgend verwendete Begriff "Öffnungsdruck" soll daher bei Verwendung im Zusammenhang mit dem Druckbegrenzungsventil bzw. dem Druckbegrenzungsventilssitz immer als ein von weiteren Parametern, nämlich abhängig von den jeweiligen Druckverhältnissen an der Eingangsöffnung und an der Ausgangsöffnung, abhängigen Druckwert verstanden werden, da das Druckbegrenzungsventil bzw. der Druckbegrenzungsventilssitz keinen festen Öffnungsdruck sondern eher eine sogenannte Öffnungscharakteristik aufweist.

Nachfolgend wird die Erfindung anhand von Zeichnungen beschrieben. Hierbei zeigt
- Fig. 1: eine erste erfindungsgemäße Ausführungsform eines kombinierten Druckbegrenzungs- und Überströmerventils,
- Fig. 2: eine zweite erfindungsgemäße Ausführungsform eines kombinierten Druckbegrenzungs- und Überströmerventils,
- Fig. 3: eine dritte erfindungsgemäße Ausführungsform eines kombinierten Druckbegrenzungs- und Überströmerventils,
- Fig. 4: eine vierte erfindungsgemäße Ausführungsform eines kombinierten Druckbegrenzungs- und Überströmerventils,
- Fig. 5: eine fünfte erfindungsgemäße Ausführungsform eines kombinierten Druckbegrenzungs- und Überströmerventils,
- Fig. 6: eine sechste erfindungsgemäße Ausführungsform eines kombinierten Druckbegrenzungs- und Überströmerventils,
- Fig. 7: eine siebte erfindungsgemäße Ausführungsform eines kombinierten Druckbegrenzungs- und Überströmerventils,
- Fig. 8: eine achte erfindungsgemäße Ausführungsform eines kombinierten Druckbegrenzungs- und Überströmerventils, und
- Fig. 9: eine neunte erfindungsgemäße Ausführungsform eines kombinierten Druckbegrenzungs- und Überströmerventils.

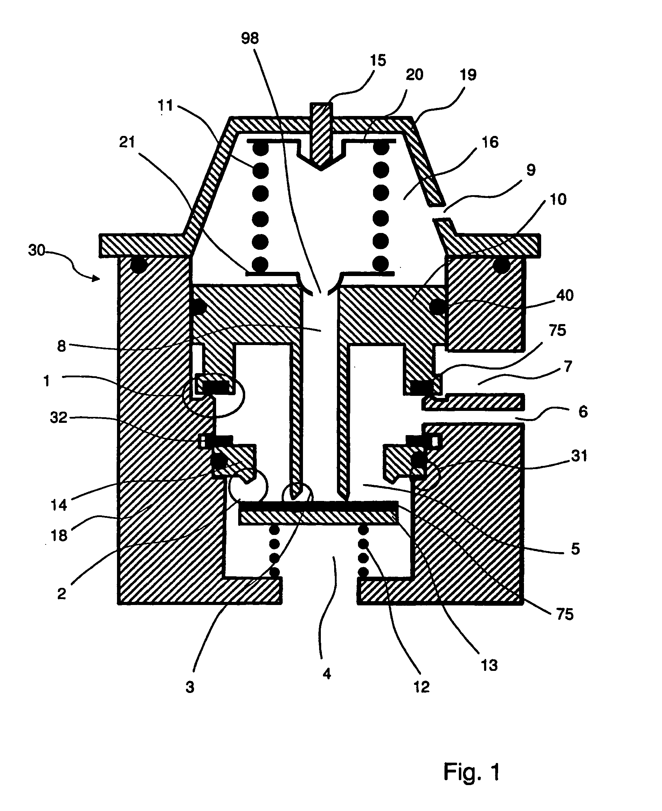

Fig. 1 zeigt eine erste erfindungsgemäße Ausführungsform eines kombinierten Druckbegrenzungs- und Überströmerventils 30, welches ein Gehäuse 18 und einen Deckel 19 umfasst. Der Deckel 19 kann hierbei auf übliche Weise, z. B. mittels Schrauben auf dem Gehäuse 18 befestigt werden. Das Gehäuse 18 weist ferner eine Eingangsöffnung 4 auf, durch welche ein erster Druckraum 5 des kombinierten Druckbegrenzungs- und Überströmerventils 30 mit Druckluft, dem sogenannten Vorratsdruck, versorgt wird. Weiterhin ist eine erste Ausgangsöffnung 7 vorgesehen, über welche die Druckluftzufuhr in einem nachgeschalteten (zweiten) Druckluftverbraucherkreis geregelt wird. Des Weiteren ist eine Entlüftungsöffnung 9 vorgesehen, durch welche ein zweiter Druckraum 16 des kombinierten Druckbegrenzungs- und Überströmerventils 30 mit der Umgebungsluft ("Atmosphäre") in Verbindung steht. Diese Entlüftungsöffnung 9 kann entweder im Gehäuse 18, zwischen Gehäuse 18 und Deckel 19, oder im Deckel 19 angeordnet sein. Wichtig ist lediglich die Verbindung des zweiten Druckraums 16 mit der Umgebungsluft ("Atmosphäre") über diese Entlüftung 9. Das kombinierte Druckbegrenzungs- und Überströmerventil 30 weist eine gemeinsame Einstellfeder 11 zur Einstellung des Öffnungs- bzw. Schließdrucks auf, welche über eine Einstellschraube 15 eingestellt werden kann. Weiterhin weist das kombinierte Druckbegrenzungs- und Überströmerventils 30 einen ersten Ventilkörper 13 auf, welcher über eine weitere Feder 12 gegen einen Kolben 10 mit einem zentralen Entlüftungskanal 8 abdichtend vorgespannt ist. Die Abdichtung erfolgt hierbei darüber, dass der erste Ventilkörper 13 gegen einen Entlüftungsventilsitz 3 des Kolbens 10 gedrückt wird. Sofern keine Entlüftungsfunktion gewünscht wird, kann der Entlüftungsventilsitz 3 auch entfallen, was beispielsweise dadurch realisiert werden könnte, dass der erste Ventilkörper 13 mit dem Kolben 10 fest verbunden wird, z. B. durch eine Klips-, Schraub-, oder Klebeverbindung. Weiterhin weist das Gehäuse 18 einen Einsatz 14 auf, welcher mit dem ersten Ventilkörper 13 einen Druckbegrenzungsventilsitz 2 bildet. Dieser Einsatz 14 wird z. B. in eine Stufe 31 des Gehäuses 18 mittels eines Sicherungsrings 32 fixiert. Es ist aber auch denkbar, den Einsatz 14 direkt in das Gehäuse 18 oder in der Stufe 31 einzukleben, einzupressen oder einzuschrauben.

Der Kolben 10 ist innerhalb des Gehäuses 18 geeignet abgedichtet, so dass in der in Fig. 1 gezeigten Ruhestellung des kombinierten Druckbegrenzungs- und Überstromerventils 30 keine Verbindung zwischen dem ersten Druckraum 5 und dem zweiten Druckraum 16 besteht. Eine solche geeignete Abdichtung kann über eine Dichtung 40 realisiert werden. Ferner ist zwischen dem Kolben 10 und dem Gehäuse 18 ein Überströmerventilssitz 1 ausgebildet, welcher in der gezeigten Ruhestellung verhindert, dass Druckluft von dem ersten Druckraum 5 zu der ersten Ausgangsöffnung 7 gelangen kann.

Zusätzlich kann in dem Gehäuse 18 eine zweite Ausgangsöffnung 6 vorgesehen sein um einen weiteren Druckluftverbraucherkreis mit einem auf einen gleichen Druckwert begrenzten Druck mit Druckluft zu versorgen. Es können selbstverständlich auch mehrere Druckluftverbraucherkreise über die zweite Ausgangsöffnung 6 versorgt werden. Die Druckluft die aus der zweiten Ausgangsöffnung 6 austritt ist somit zwar druckbegrenzt (durch den Druckbegrenzugsventilsitz 2), aber sie umgeht den Überströmerventilsitz 1. Weitere Druckkreise die an der zweiten Ausgangsöffnung 6 angeschlossen sind, können mit eigenen Überströmerventilen, z. B. in herkömmlicher Bauweise, ausgerüstet sein. Auf diese Weise werden hinter dem Druckbegrenzungsventil mehrere Überströmerventile parallel versorgt, von denen einer gemäß der vorausgehenden Beschreibung mit dem Druckbegrenzungsventil kombiniert wird.

Des Weiteren kann zusätzlich die Einstellfeder 11 an ihren Enden mit einer ersten Federkappe 20 und/oder einer zweiten Federkappe 21 versehen sein, welche sicherstellen, dass die über die Einstellfeder 11 auf den Kolben 10 eingeleitete Kraft möglichst zentral auf den Kolben 10 trifft. Es ist natürlich auch möglich, nur eine Federkappe (20 oder 21) an der Einstellfeder 11 vorzusehen.

Um eine bessere Abdichtung des Überströmerventilsitzes 1 und/oder des Druckbegrenzungsventilsitzes 2 und/oder des Entlüftungsventilsitzes 3 zu erzielen, können diese Ventilsitze jeweils mit einer Elastomerbeschichtung 75 versehen werden. Es versteht sich hierbei von selbst, dass mit dem Bezugszeichen 75 lediglich funktional eine Elastomerbeschichtung bezeichnet ist. Diese Elastomerbeschichtung kann bei entweder bei allen oben genannten Ventilsitzen aus demselben Material bestehen oder aber auch bei jedem Ventilsitz aus einem anderen Material. Daher ist die Elastomerbeschichtung 75 nicht dahingehend beschränkend auszulegen, dass es sich hierbei um ein- und dieselbe Elastomerbeschichtung für alle oben genannten Ventilssitze handelt.

Nachfolgend wird die Funktion des kombinierten Druckbegrenzungs- und Überströmerventils 30 anhand der Fig. 1 beschrieben.

Sofern noch kein Druck in der Luftdruckaufbereitungsanlage vorherrscht drückt die Einstellfeder 11 mit einer über die Einstellschraube 15 eingestellten Federkraft über die erste und zweite Federkappe 20 und 21 auf den Kolben 10. Der zweite Druckraum 16, in dem die Einstellfeder 11 angeordnet ist, weist hierbei Umgebungsdruck ("Atmosphärendruck") auf, da der zweite Druckraum 16 über die Entlüftungsöffnung 9 jederzeit mit der Umgebungsluft in Verbindung steht. Der Kolben 10 ist über eine Dichtung 40 gegen das Gehäuse 18 abgedichtet und stützt sich auf dem Überströmerventilsitz 1 ab. Zusätzlich hält der Kolben 10 den ersten Ventilkörper 13 gegen die weitere Feder 12 niedergedrückt, da die Einstellfeder 11 eine größere Federkraft aufweist als die weitere Feder 12, wodurch der Druckbegrenzungsventilsitz 2 geöffnet ist. Aufgrund der Federkraft der Einstellfeder 11 sind sowohl der Überströmerventilsitz 1, als auch der Entlüftungsventilsitz 3 geschlossen. Somit ist die Ausgangsöffnung 7 ebenfalls verschlossen.

Tritt nun Druckluft, welche durch einen Kompressor bereitgestellt wird, in die Eingangsöffnung 4 ein, so passiert diese nun den offenen Druckbegrenzungsventilsitz 2 und strömt in den ersten Druckraum 5 ein.

Steigt der Druck der einströmenden Druckluft an der Eingangsöffnung 4 und damit in Raum 5 an, so wird der Kolben 10 hierdurch entgegen der Federkraft der Einstellfeder 11 bewegt. Erreicht der Druck der einströmenden Druckluft den gewünschten Öffnungsdruck des Überströmerventilsitzes 1, so stützt sich der Kolben 10 nicht mehr weiter auf dem Überströmerventilsitz 1 im Gehäuse 18 ab, sondern bewegt sich gegen die Federkraft der Einstellfeder 11 und öffnet damit den Überströmerventilsitz 1. Nun kann die Druckluft aus dem ersten Druckraum 5 durch die erste Ausgangsöffnung 7 in den nachgeschalteten Druckluftverbraucherkreis strömen, so dass dort der Druck ansteigt, bis zwischen dem Druckluftverbraucherkreis, dem ersten Druckraum 5 und der Eingangsöffnung 4 Druckgleichheit herrscht.

Steigt der Druck der einströmenden Druckluft an der Eingangsöffnung 4, und damit auch im ersten Druckraum 5 und der ersten Ausgangsöffnung 7 weiter an, so hebt sich der Kolben 10 weiter. Der erste Ventilkörper 13 wird aufgrund der Federkraft der weiteren Feder 12 nachgeführt, so dass der Entlüftungsventilsitz 3 geschlossen bleibt.

Erreicht der Druck der einströmenden Druckluft im ersten Druckraum 5 den eingestellten Maximaldruck des zu versorgenden Druckluftverbraucherkreises, so hat sich der Kolben 10 so weit bewegt, dass der Ventilkörper 13 auf dem Druckbegrenzungsventilsitz 2 des gehäusefesten Einsatzes 14 zum Aufliegen kommt. Damit wird der erste Druckraum 5 und damit auch die erste Ausgangsöffnung 7 und die zweite Ausgangsöffnung 6 sowie die daran angeschlossenen Druckluftverbraucherkreise von der Druckluftversorgung über die Eingangsöffnung 4 getrennt.

Steigt der Druck an der Eingangsöffnung 4 weiter an, so wird dieser Druck nicht an den ersten Druckraum 5 und die erste und zweite Ausgangsöffnung 6 bzw. 7 weitergeleitet, somit kann auch nicht der Druck in den an den ersten und zweiten Ausgangsöffnungen 6, 7 angeschlossenen Druckluftverbraucherkreisen ansteigen. Kommt es aufgrund eines Defektes, z. B. einer Undichtigkeit des Druckbegrenzungsventilsitzes 2, zu einem ungewollten Druckanstieg im ersten Druckraum 5, so wird der Kolben 10 weiter angehoben. Der erste Ventilkörper 13 wird von der weiteren Feder 12 jedoch nicht mehr auf dem Entlüftungsventilsitz 3 abgestützt, sondern auf dem Druckbegrenzungsventilsitz 2 des Einsatzes 14 gehalten. Dies führt dazu, dass der erste Ventilkörper 13 dem Kolben 10 nicht mehr folgt. Der Kolben 10 hebt also vom ersten Ventilkörper 13 ab und der Entlüftungsventilsitz 3 öffnet sich. Aus dem ersten Druckraum 5 entweicht Druckluft über den Entlüftungskanal 8 im Kolben 10 in den zweiten Druckraum 16 und weiter durch die Entlüftungsöffnung 9 in die Atmosphäre. Der Druck im Druckraum 5 nimmt dadurch soweit ab, bis der Kolben 10 sich auf den ersten Ventilkörper 13 absenkt und den Entlüftungsventilsitz 3 wieder schließt. Diese Entlüftungsfunktion ist natürlich nur gegeben, wenn eine Verbindung zwischen dem Entlüftungskanal 8 und dem zweiten Druckraum 16 besteht. Sofern die Einstellfeder 11 ohne eine zweite Federkappe 21 direkt auf dem Kolben 10 aufliegt erfolgt die Verbindung einfach durch die Windungen der Einstellfeder 11. Sofern eine zweite Federkappe 21 verwendet wird, kann die Verbindung durch eine geeignete Perforierung, z. B. durch ein oder mehrere Löcher in der zweiten Federkappe 21, realisiert werden. In Fig. 1 ist hierzu beispielhaft eine Federkappenöffnung 98 gezeigt. Ferner ist es auch möglich, diese Verbindung durch eine geeignete Ausformung des Kolbens 10 sicherzustellen. Beispielsweise kann der Kolben 10 in dem Bereich, in denen die zweite Federkappe 21 den Kolben 10 berührt, Stege aufweisen, auf denen die zweite Federkappe 21 derart aufliegt, dass die durch den Entlüftungskanal 8 hindurchtretende Druckluft unter der zweiten Federkappe 21 in den zweiten Druckraum 16 strömen kann. Anstelle der beschriebenen Stege kann der Kolben 10 auch Kanäle aufweisen, welche eine Verbindung zwischen dem Entlüftungskanal 8 und dem zweiten Druckraum 16 sicherstellen.

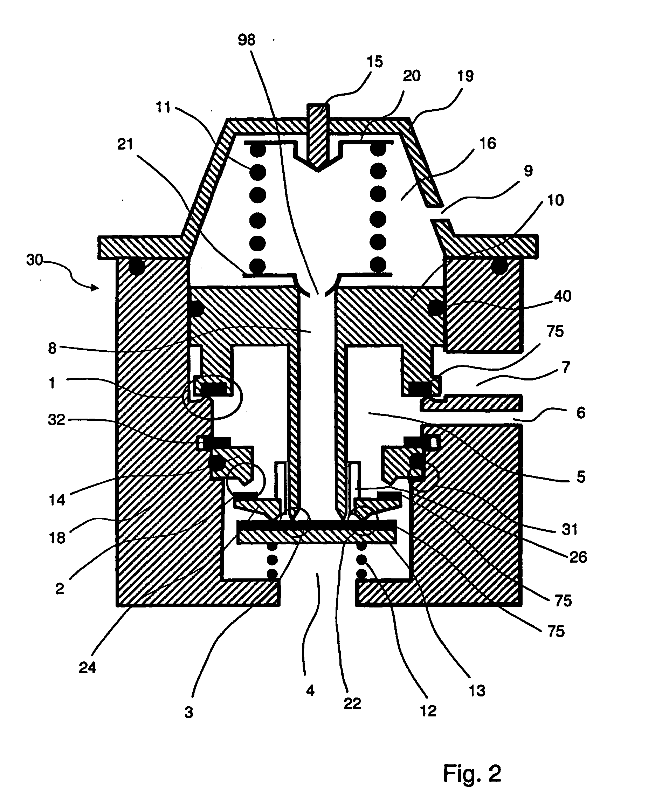

Fig. 2 zeigt eine zweite erfindungsgemäße Ausführungsform eines kombinierten Druckbegrenzungs- und Überströmerventils 30, welches sich dahingehend von der Fig. 1 unterscheidet, dass ein zweistufiger Druckbegrenzer verwendet wird. Hierzu wird ein dritter Ventilkörper 24 mittels sogenannter Führungsrippen 26 auf dem Kolben 10 axial verschiebbar angebracht. Die Führungsrippen 26 sind so ausgebildet, dass zwischen dem den Kolben 10 zugewandten Teil des Hilfsdruckbegrenzungsventilsitzes 22 und dem ersten Druckraum 5 eine Verbindung besteht, so dass bei einem geöffneten Hilfsdruckbegrenzungsventilsitz 22 und geschlossenen Druckbegrenzungsventilsitz 2 Luft von der Eingangsöffnung 4 über den geöffneten Hilfsdruckbegrenzungsventilsitz 22 in den ersten Druckraum 5 strömen kann.

Der Druckbegrenzungsventilsitz 2 ist somit bei dem zweistufigen Druckbegrenzer zwischen dem dritten Ventilkörper 24 und dem Einsatz 14 ausgebildet, während der Hilfsdruckbegrenzungsventilsitz 22 zwischen dem dritten Ventilkörper 24 und dem ersten Ventilkörper 13 ausgebildet ist.

Durch den dritten Ventilkörper 24 umfasst der Druckbegrenzer somit zwei Ventilsitze (Druckbegrenzungsventilsitz 2 und Hilfsdruckbegrenzungsventilsitz 22), durch die Luft von der Eingangsöffnung 4 zum ersten Druckraum 5 passieren kann. Der Druckbegrenzungsventilsitz 2 hat hierbei einen gegenüber dem Hilfsdruckbegrenzungsventilsitz 22 größeren Durchmesser (d. h. größere Nennweite), die wichtig ist, um die Luftaufbereitungsanlage im Nutzfahrzeug schnell befüllen zu können.

In dem Fall, dass ein der ersten Ausgangsöffnung 7 nachgeschalteter Druckluftverbraucherkreis, der über den zweistufigen Druckbegrenzer versorgt wird, Druckluft verbraucht, öffnet der zweistufige Druckbegrenzer, um wieder Druckluft nachzuspeisen. Der Öffnungsdruck hängt nicht nur vom Druck an der ersten Ausgangsöffnung 7, sondern auch vom Vorratsdruck an der Eingangsöffnung 4 ab. Die Abhängigkeit vom Vorratsdruck wird aufgrund der Flächenverhältnisse kleiner, je kleiner der Ventilsitz des zweistufigen Druckbegrenzers ist. Durch den kleineren der beiden Ventilsitze (hier also der Hilfsdruckventilsitz 22) wird also eine hohe Nachfüllempfindlichkeit erreicht, d. h. dass der Druck in dem Druckluftverbraucherkreis um einen geringeren Betrag abfällt, bevor wieder Druckluft über den zweistufigen Druckbegrenzer nachgefüllt wird.

Der Rest der Fig. 2 ist, zumindest funktional, identisch zur Fig. 1 und kann der Beschreibung der Fig. 1 entnommen werden.

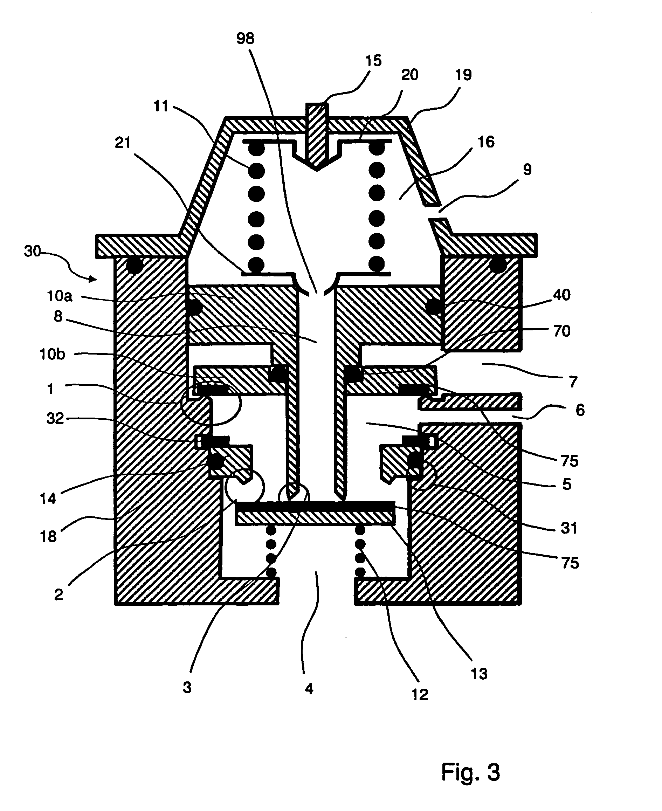

Fig. 3 zeigt eine dritte erfindungsgemäße Ausführungsform eines kombinierten Druckbegrenzungs- und Überströmerventils 30, welches sich dahingehend von der Fig. 1 unterscheidet, dass anstelle eines einteiligen Kolbens 10 (siehe Fig. 1) ein zweiteiliger Kolben, bestehend aus einem Hauptkolben 10a und einem Ring 10b verwendet wird. Der Ring 10b kann hierbei entweder mit dem Hauptkolben 10a starr verbunden (z. B. verklebt) sein, oder aber der Ring 10b kann so montiert sein, dass er gegen den Hauptkolben 10a verkippbar gelagert ist, wodurch ein eventuell auftretender Schiefstand des Überströmerventilsitzes 1 (zumindest teilweise) ausgeglichen werden kann. Zur verkippbaren Anordnung des Rings 10b am Hauptkolben 10a kann zwischen Ring 10b und Hauptkolben 10a ein elastisches Element 70, beispielsweise ein O-Ring, angeordnet werden. Dieses elastische Element 70 dient gleichzeitig dazu, dass der Ring 10b zum Hauptkolben 10a hin abgedichtet ist. Der Rest der Fig. 3 ist, zumindest funktional, identisch zur Fig. 1.

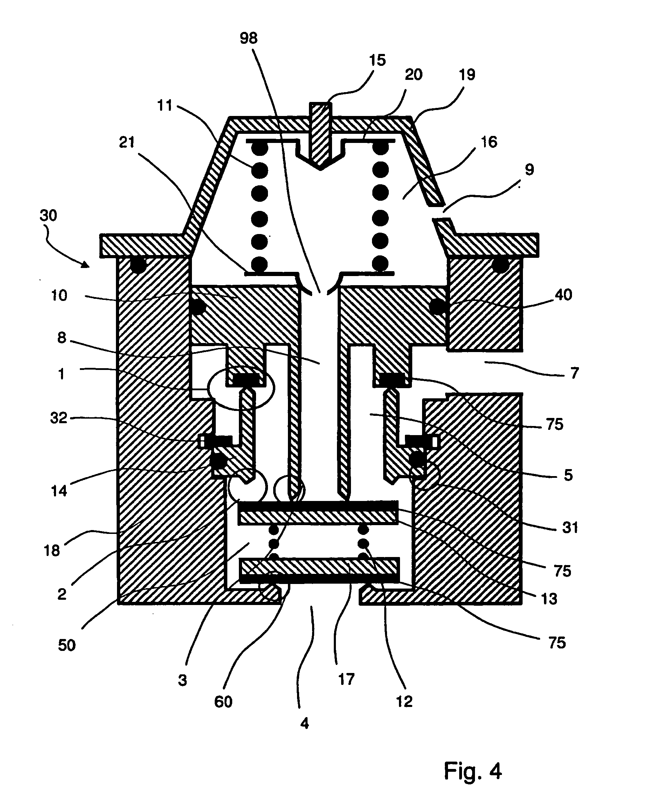

Fig. 4 zeigt eine vierte erfindungsgemäße Ausführungsform eines kombinierten Druckbegrenzungs- und Überströmerventils 30, welches sich dahingehend von der Fig. 1 unterscheidet, dass der Überströmerventilsitz 1 zwischen dem Kolben 10 und dem Einsatz 14 gebildet wird. Ferner unterscheidet sich Fig. 4 von Fig. 1 dahingehend, dass mittels eines zweiten Ventilkörpers 17 und eines Rückschlagventilsitzes 60 ein Rückschlagventil vor einem dritten Druckraum 50 gebildet wird. Der zweite Ventilkörper 17 ist an dem Ende der weiteren Feder 12 angeordnet, welches dem ersten Ventilkörper 13 abgewandt ist, wobei die weitere Feder 12 den zweiten Ventilkörper 17 gegen den Rückschlagventilsitz 60 drückt. Hierdurch ist, zumindest solange an der Eingangsöffnung 4 kein Druck ansteht, die Eingangsöffnung 4 gegenüber dem dritten Druckraum 50 abgesperrt. Sobald Überdruck an der Eingangsöffnung 4 ansteht, hebt dieser den zweiten Ventilkörper 17 entgegen der Federkraft der weiteren Feder 12 ab, so dass eine Verbindung zwischen der Eingangsöffnung 4 und dem dritten Druckraum 50 hergestellt wird. Durch diese vierte erfindungsgemäße Ausführungsform ist somit auch ein Rückschlagventil, gebildet aus dem zweiten Ventilkörper 17 und dem Rückschlagventilsitz 60, unter Verwendung der bereits vorhandenen weiteren Feder 12 in dem kombinierten Druckbegrenzungs- und Überströmerventil 30 integriert. Dieser Rückschlagventilsitz 60 kann ebenfalls wieder mit einer Elastomerbeschichtung 75 versehen sein. Ferner ist in Fig. 4 eine Ausführungsform ohne eine zweite Ausgangsöffnung (siehe Bezugszeichen 6 in Fig. 1) gezeigt, welche auch auf die Asuführungsformen der vorherigen Figuren übertragen werden kann und umgekehrt. Der Rest der Fig. 4 ist, zumindest funktional, identisch zur Fig. 1.

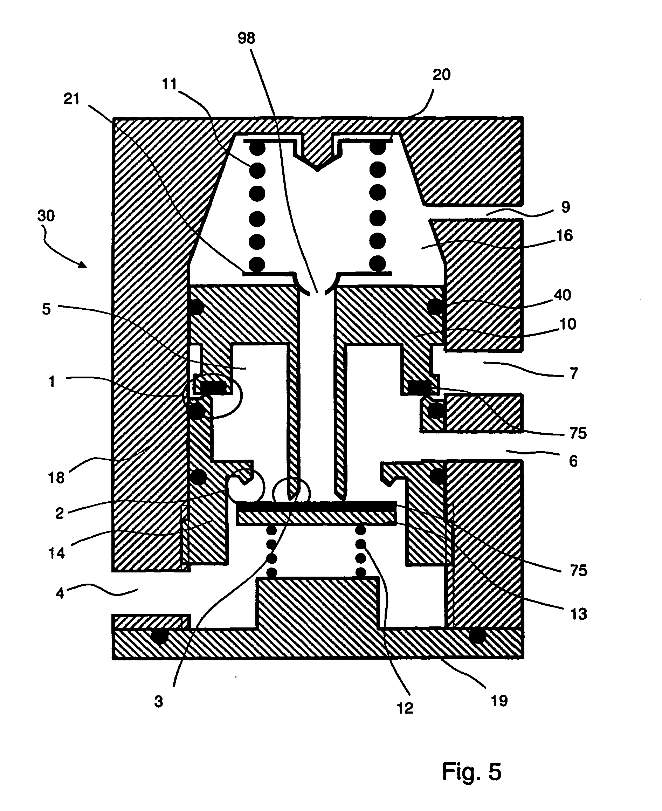

Fig. 5 zeigt eine fünfte erfindungsgemäße Ausführungsform eines kombinierten Druckbegrenzungs- und Überströmerventils 30, welches sich dahingehend von der Fig. 1 unterscheidet, dass der Einsatz 14 in das Gehäuse 18 eingeschraubt ist. Hierzu kann beispielsweise der Einsatz 14 einen großen Innensechskant aufweisen, damit der Einsatz 14 angetrieben werden kann. Durch das Einschrauben kann die erforderliche Federkraft der Einstellfeder 11 eingestellt werden. Eine separate Einstellschraube ist in dieser Ausführung nicht mehr erforderlich. Ferner ist die Eingangsöffnung 4 seitlich und nicht axial angeordnet. Der Deckel 19 ist in dieser Ausführungsform von unten an dem Gehäuse 18 befestigt. Die fünfte erfindungsgemäße Ausführungsform stellt somit, bezogen auf die Gehäuse-Deckel-Anordnung, eine Invertierung der ersten erfindungsgemäßen Ausführungsform gemäß Fig. 1 dar, wobei der Überströmerventilsitz 1 zwischen dem Kolben 10 und dem Einsatz 14 und nicht dem Gehäuse 18 gebildet wird, wie es auch in Fig. 4 gezeigt ist.

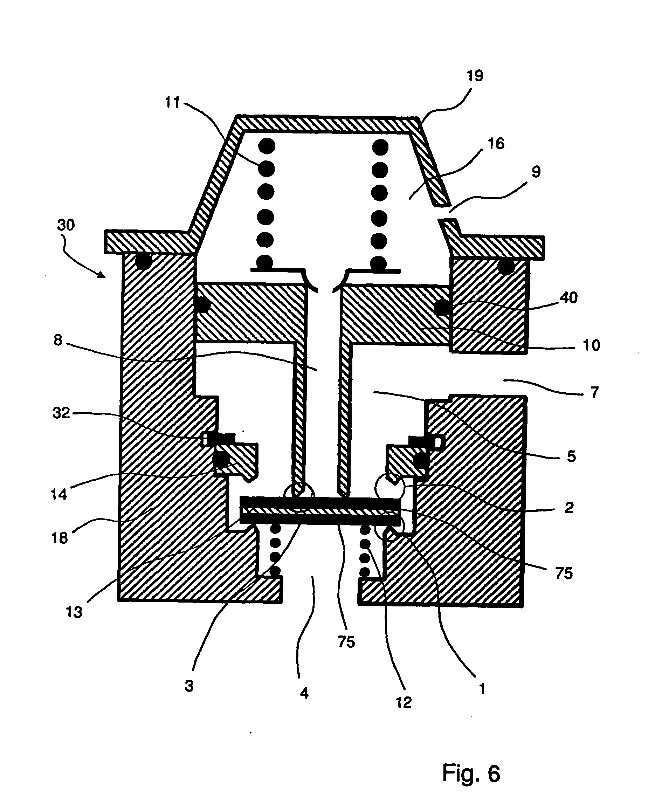

Fig. 6 zeigt eine sechste erfindungsgemäße Ausführungsform eines kombinierten Druckbegrenzungs- und Überströmerventils 30, welches sich dahingehend von der Fig. 1 unterscheidet, dass der erste Ventilkörper 13 mit dem Gehäuse 18 einen Überströmerventilsitz 1, mit dem Einsatz 14 einen Druckbegrenzungsventilsitz 2 und mit dem Kolben 10 einen Entlüftungsventilsitz 3 bildet. Hierbei kann der erste Ventilkörper 13 eine bediseitige Elastomerbeschichtung 75 aufweisen.

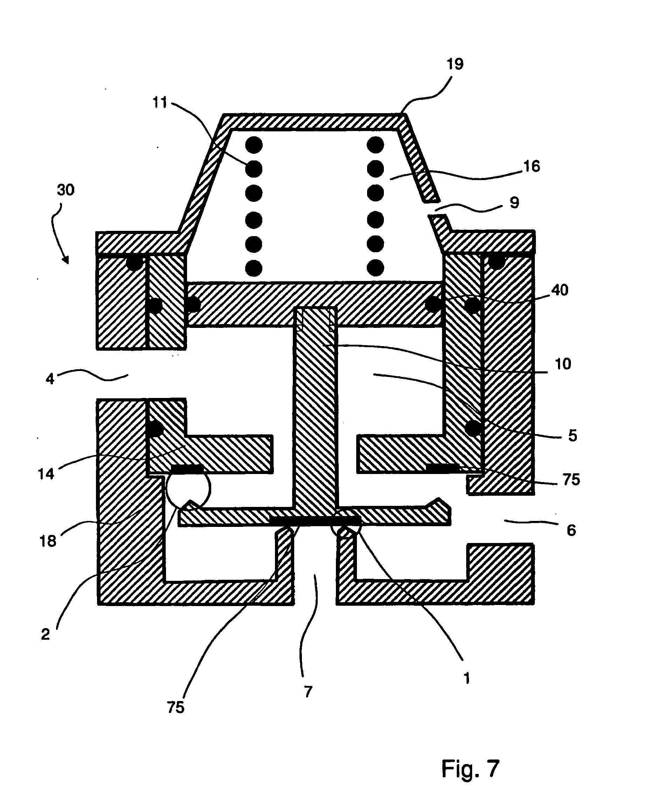

Fig. 7 zeigt eine siebte erfindungsgemäße Ausführungsform eines kombinierten Druckbegrenzungs- und Überströmerventils 30, welches sich dahingehend von der Fig. 1 unterscheidet, dass kein Entlüftungsventilsitz vorgesehen ist. Falls also der Druckbegrenzungsventilsitz 2 undicht ist, was dazu führen würde, dass an der ersten Ausgangsöffnung 7 ein zu hoher Druck anliegt, so könnte dies dadurch verhindert werden, dass zwischen der ersten Ausgangsöffnung 7 und einem nachgeschalteten Druckluftverbraucherkreis ein separates Entlüftungsventil eingebaut wird.

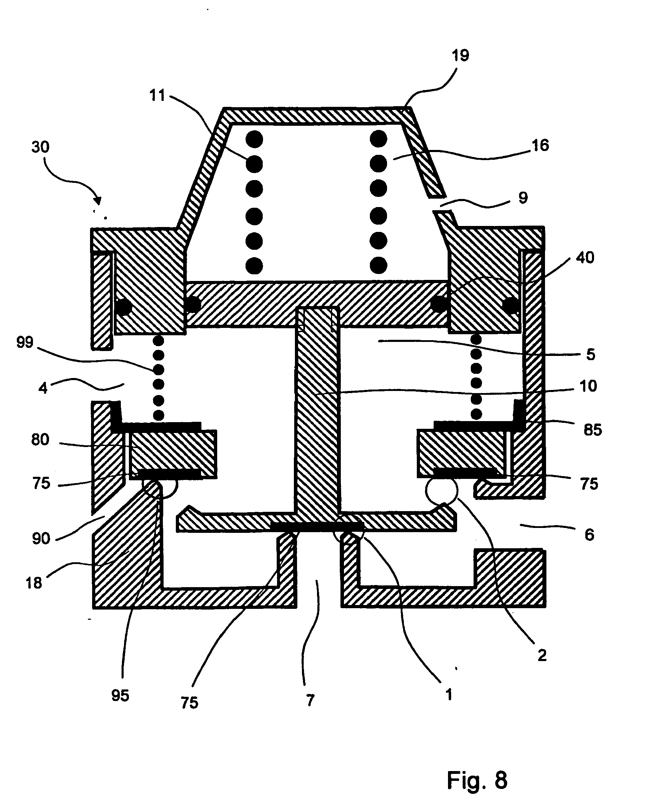

Fig. 8 zeigt eine achte erfindungsgemäße Ausführungsform eines kombinierten Druckbegrenzungs- und Überströmerventils 30, welches sich dahingehend von der

Fig. 7 unterscheidet, dass zusätzlich ein Entlüftungsventil mit in dem kombinierten Druckbegrenzungs- und Überströmerventil 30 integriert ist. Das Entlüftungsventil wird hierbei durch einen gegenüber dem Gehäuse 18 beweglichen Entlüftungseinsatz 80 gebildet, wobei der Entlüftungseinsatz 80 mit einem Teil des Gehäuses 18 einen Gehäuseentlüftungsventilsitz 95 bildet, welcher einen Gehäuseentlüftungskanal 90 in der Ruhestellung mittels einer Entlüftungsfeder 99 verschließt. Der Gehäuseentlüftungsventilsitz 95 kann ebenfalls eine Elastomerbeschichtung 75 aufweisen. Damit bei geschlossenen Gehäuseentlüftungsventilsitz 95 zwischen dem Entlüftungseinsatz 80 und dem Gehäuse 18 keine Luft in den Gehäuseentlüftungskanal 90 entweichen kann, ist zwischen dem Gehäuse 18 und dem Entlüftungseinsatz 80 eine Membran 85 angeordnet. Die Membran 85 weist gegenüber einem O-Ring als Dichtelelement den Vorteil auf, dass sie nahezu keine Reibung verursacht.

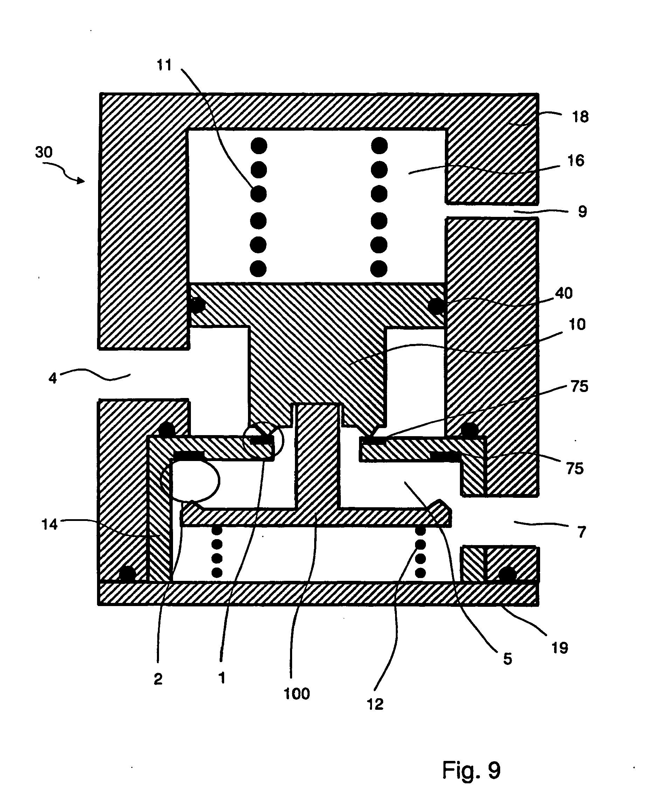

Fig. 9 zeigt eine neunte erfindungsgemäße Ausführungsform eines kombinierten Druckbegrenzungs- und Überströmerventils 30, welches sich dahingehend von der Fig. 1 unterscheidet, dass einerseits kein integriertes Entlüftungsventil vorgesehen ist und dass das kombinierte Druckbegrenzugs- und Überströmerventil 30 "invertiert" im Gehäuse 18 bzw. Deckel 19 angeordnet ist. Gemäß Fig. 9 stützt sich der Kolben 10 über die Einstellfeder 11 gegen das Gehäuse 18 ab. Ferner wird der Kolben 10 über einen Hilfskolben 100 und über eine weitere Feder 12 gegen den Deckel 19 abgestützt. Der Hilfskolben 100 steht hierbei mit dem Kolben 10 in Wirkverbindung. Die Fig. 9 zeigt wiederum die Ruhestellung, d. h. der Überströmerventilsitz 1 ist geschlossen und der Druckbegrenzungsventilsitz 2 ist geöffnet. Strömt nun Druckluft durch die Eingangsöffnung 4 ein bzw. wird dort der Druck erhöht, so wird der Kolben 10 gegen die Federkraft der Einstellfeder 11 nach oben bewegt, wodurch sich der Überströmerventilsitz 1 zwischen dem Kolben 10 und dem Einsatz 14 öffnet, so dass die Druckluft über den ersten Druckraum 5 zur ersten Ausgangsöffnung 7 strömen kann. Der Hilfskolben 100 folgt durch die Federkraft der weiteren Feder 12 der Bewegung des Kolbens 10 nach oben. Ist der Druck der Druckluft an der

Eingangsöffnung 4 soweit angestiegen, dass der maximal zulässige Druckwert erreicht wurde, so ist der Kolben 10 und damit auch der Hilfskolben 10 soweit nach oben bewegt worden, dass der Druckbegrenzungsventilsitz 2 zwischen dem Hilfskolben 100 und dem Einsatz 14 geschlossen wird. Somit kann keine weitere Druckluft mehr von der Eingangsöffnung 4 zum ersten Druckraum 5 und damit zur ersten Ausgangsöffnung 7 gelangen.

Selbstverständlich können die gezeigten und beschriebenen Ausführungsformen auch in anderer Weise sinnvoll miteinander kombiniert werden. Die hier gezeigten und beschriebenen Ausführungsformen sind daher nur als Anregungen für den Fachmann gedacht. Die vielfältigen möglichen Kombinationen die sich hierbei in nahe liegender Weise ergeben, fallen selbstverständlich ebenfalls unter den Erfindungsgedanken.

Des Weiteren tragen funktional gleiche Bauteile in den Figuren 1 bis 9 dieselben Bezugszeichen.

Sofern die Erfindung in einer Luftaufbereitungsanlage Verwendung findet, können auch mehrere Einheiten aus Druckbegrenzungs- und Überströmerventilen in einem Gerät eingebaut werden.

Die Ventilsitzkonturen des Überströmerventilsitzes 1, des Druckbegrenzungsventilsitzes 2, des Entlüftungsventilsitzes 3, des Rückschlagventilsitzes 60 und des Gehäuseentlüftungsventilsitzes 95 können jeder für sich entweder im Gehäuse 18 oder im Einsatz 14 bzw. Entlüftungseinsatz 80 oder im Kolben 10, Hauptkolben 10a, Ring 10b, ersten Ventilkörper 13, zweiten Ventilkörper 17 oder Hilfskolben 100 ausgeführt werden.

Nachfolgend wird die Einstellung der Öffnungs- und Schließdrücke des kombinierten Druckbegrenzungs- und Überströmerventils 30 beschrieben. Das folgende Beispiel bezieht sich hierbei auf eine Ausführungsform mit Einstellschraube wie sie unter anderem in Fig. 1 gezeigt ist. Die vier wichtigsten Parameter zur Einstellung sind der Durchmesser des Überströmerventilsitzes 1, der Durchmesser der Bohrung im Gehäuse 18, dort wo die Dichtung 40 gegen das Gehäuse 18 dichtet, sowie die Federkräfte der Einstellfeder 11, einmal beim Öffnen des Überströmerventilsitzes 1 und einmal beim Schließen des Druckbegrenzungsventilsitzes 2. Die Federkräfte der Einstellfeder 11 hängen hierbei ab von der Federrate der Einstellfeder 11 und dem Hub des Kolbens 10 vom Öffnen des Überströmerventilsitzes 1 bis zum Schließen des Druckbegrenzungsventilsitzes 2 (also der Abstand zwischen dem ersten Ventilkörper 13 bzw. der darauf angebrachten Elastomerbeschichtung 75 und dem Einsatz 14). Die weitere Feder 12 hat bei dieser Betrachtung keine Auswirkung, da sie gegenüber der Einstellfeder 11 eine deutlich geringere Federkraft aufweist.

Beim Öffnen des Überströmerventilsitzes 1 wirkt der Druck beim ersten Befüllen nur auf der Einlassseite (also an der Eingangsöffnung 4). Beim Schließen des Überströmerventilsitzes 1 wirkt der Druck auch auf der Ausgangsseite (also an der ersten Ausgangsöffnung 7). Das Verhältnis von Öffnungs- und Schließdruck des Überströmerventilsitzes 1 wird im Wesentlichen (wenn man die Reibungs- und Dichtkräfte vernachlässigt) von dem Durchmesser des Überströmerventilsitzes 1 und dem Durchmesser der Bohrung im Gehäuse 18 und dem daraus resultierenden Flächenverhältnis bestimmt, da die Federlänge und -kraft der Einstellfeder 11 im Wesentlichen beim Abheben (also beim Öffnen) bzw. beim Aufsetzen (also beim Schließen) des Überströmerventilsitzes 1 gleich groß ist.

Wird der Überströmerventilsitz 1 geöffnet, so ist auch der Kolben 10 und der erste Ventilkörper 13 so lange nach oben beweglich, bis der maximale Hub zurückgelegt ist und das Druckbegrenzungsventil 2 schließt. Durch die Auslegung des Hubes bestimmt man also die Differenz der Federlänge und aus der Federrate bestimmt sich die Federkraft der Einstellfeder 11. Daraus resultiert der Abstand zwischen Schließdruck des Überströmerventilsitzes 1 und Schließdruck des Druckbegrenzungsventilsitzes 2, da für beide die druckbeaufschlagte fläche mit dem Durchmesser der Bohrung im Gehäuse 18 bestimmend ist. Die Federkraft der weiteren Feder 12 auf den ersten Ventilkörper 13 kann vernachlässigt werden, da diese Federkraft gegenüber der Federkraft der Einstellfeder 11 gering ist.

Ferner ist es auch denkbar, den Einsatz 14 einstellbar, beispielsweise über eine Gewindeverbindung, mit dem Gehäuse 18 zu verbinden. Hierdurch kann der Hub des Druckbegrenzungsventilsitzes 2 eingestellt werden. Somit kann über die Einstellfeder 11 der Öffnungsdruck des Überströmerventilsitzes 1 exakt eingestellt werden, während der Schließdruck des Druckbegrenzungsventilsitzes 2 über die Einstellfeder 11 grob voreingestellt und über den einstellbaren Einsatz 14 fein eingestellt werden kann.

### Bezugszeichenliste

- 1: Überströmerventilsitz
- 2: Druckbegrenzungsventilsitz
- 3: Entlüftungsventilsitz
- 4: Eingangsöffnung
- 5: erster Druckraum
- 6: zweite Ausgangsöffnung
- 7: erste Ausgangsöffnung
- 8: Entlüftungskanal
- 9: Entlüftungsöffnung
- 10: Kolben
- 10a: Hauptkolben
- 10b: Ring
- 11: Einstellfeder
- 12: weitere Feder
- 13: erster Ventilkörper
- 14: Einsatz
- 15: Einstellschraube
- 16: zweiter Druckraum
- 17: zweiter Ventilkörper
- 18: Gehäuse
- 19: Deckel
- 20: erste Federkappe
- 21: zweite Federkappe
- 22: Hilfsdruckbegrenzungsventilsitz
- 24: dritter Ventilkörper
- 26: Führungsrippen
- 30: kombiniertes Druckbegrenzungs- und Überströmerventil
- 31: Stufe
- 32: Sicherungsring
- 40: Dichtung
- 50: dritter Druckraum
- 60: Rückschlagventilsitz
- 70: elastisches Element
- 75: Elastomerbeschichtung
- 80: Entlüftungseinsatz
- 85: Membran
- 90: Gehäuseentlüftungskanal
- 95: Gehäuseentlüftungsventilsitz
- 98: Federkappenöffnung
- 99: Entlüftungsfeder

## Patentansprüche

1. Kombiniertes Druckbegrenzungs- und Überströmerventil, insbesondere für eine Luftaufbereitungsanlage in einem Nutzfahrzeug, wobei das kombinierte Druckbegrenzungs- und Überströmerventil (30) ein Gehäuse (18), einen Deckel (19), eine Eingangsöffnung (4), eine erste Ausgangsöffnung (7), einen Kolben (10), einen Überströmerventilsitz (1), einen Druckbegrenzungsventilsitz (2) und eine Einstellfeder (11) aufweist,
**dadurch gekennzeichnet, dass**
durch die Einstellfeder (11) sowohl ein Öffnungs- und ein Schließdruck des Überströmerventilsitzes (1) als auch ein Öffnungs- und ein Schließdruck des Druckbegrenzungsventilsitzes (2) einstellbar ist.

2. Kombiniertes Druckbegrenzungs- und Überströmerventil nach Anspruch 1,
**dadurch gekennzeichnet, dass**
der Kolben (10) das kombinierte Druckbegrenzungs- und Überströmerventil (30) in einen ersten Druckraum (5) und einen zweiten Druckraum (16) unterteilt, wobei der erste Druckraum (5) mit der Eingangsöffnung (4) und mit der ersten Ausgangsöffnung (7) verbindbar ist, und wobei der zweite Druckraum (16) über eine Entlüftungsöffnung (9) mit der Atmosphäre in Verbindung steht, wobei zwischen dem Kolben (10) und dem Gehäuse (18) oder zwischen dem Kolben (10) und dem Deckel (19) die Einstellfeder (11) derart angeordnet ist, dass durch die Federkraft dieser Einstellfeder (11) der Kolben (10) in einer Ruhestellung gehalten wird, wobei in dieser Ruhestellung der Überströmerventilsitz (1) geschlossen ist während der Druckbegrenzungsventilsitz (2) geöffnet ist.

3. Kombiniertes Druckbegrenzungs- und Überströmerventil nach Anspruch 1 oder 2, **dadurch gekennzeichnet, dass** die Einstellfeder (11) durch eine Einstellschraube (15) einstellbar ist.

4. Kombiniertes Druckbegrenzungs- und Überströmerventil nach Anspruch 3, **dadurch gekennzeichnet, dass** zwischen der Einstellfeder (11) und der Einstellschraube (15) eine erste Federkappe (20) angeordnet ist.

5. Kombiniertes Druckbegrenzungs- und Überströmerventil nach mindestens einem der vorherigen Ansprüche, **dadurch gekennzeichnet, dass** zwischen der Einstellfeder (11) und dem Kolben (10) eine zweite Federkappe (21) angeordnet ist.

6. Kombiniertes Druckbegrenzungs- und Überströmerventil nach mindestens einem der vorherigen Ansprüche, **dadurch gekennzeichnet, dass** der Kolben (10) als zweiteiliger Kolben (10a, 10b) ausgeführt ist, welcher einen Hauptkolben (10a) und einen Ring (10b) umfasst.

7. Kombiniertes Druckbegrenzungs- und Überströmerventil nach Anspruch 6, **dadurch gekennzeichnet, dass** der Ring (10b) über ein elastisches Element (70) gegenüber dem Hauptkolben (10a) verkippbar gelagert ist.

8. Kombiniertes Druckbegrenzungs- und Überströmerventil nach Anspruch 1 oder 6, **dadurch gekennzeichnet, dass** der Kolben (10) oder der Hauptkolben (10a) einen Entlüftungskanal (8) aufweist.

9. Verwendung des kombiniertes Druckbegrenzungs- und Überströmerventil nach mindestens einem der vorherigen Ansprüche in einer Luftaufbereitungsanlage in einem Nutzfahrzeug.

## Claims

1. Combined pressure limiting and overflow valve, particularly for an air processing unit in a commercial vehicle, the combined pressure limiting and overflow valve (30) comprising a housing (18), a cover (19), an inlet aperture (4), a first outlet aperture (7), a piston (10), an overflow valve seat (1), a pressure limiting valve seat (2) and an adjustment spring (11),
**characterized in that**
the adjustment spring (11) serves for the adjustment both of an opening and a closing pressure of the overflow valve seat (1) and of an opening and a closing pressure of the pressure limiting valve seat (2).

2. Combined pressure limiting and overflow valve according to Claim 1,
**characterized in that**
the piston (10) divides the combined pressure limiting and overflow valve (30) into a first pressure chamber (5) and a second pressure chamber (16), the first pressure chamber (5) being connectable to the inlet aperture (4) and to the first outlet aperture (7), and the second pressure chamber (16) being connected via a venting aperture (9) to the atmosphere, the adjustment spring (11) being arranged between the piston (10) and the housing (18) or between the piston (10) and the cover (19), in such a way that the piston (10) is held in a rest position by the spring force of this adjustment spring (11), the overflow valve seat (1) being closed in this rest position whilst the pressure limiting valve seat (2) is opened.

3. Combined pressure limiting and overflow valve according to Claim 1 or 2, **characterized in that** the adjustment spring (11) can be adjusted by an adjusting screw (15).

4. Combined pressure limiting and overflow valve according to Claim 3, **characterized in that** a first spring cap (20) is arranged between the adjustment spring (11) and the adjusting screw (15).

5. Combined pressure limiting and overflow valve according to at least one of the preceding claims, **characterized in that** a second spring cap (21) is arranged between the adjustment spring (11) and the piston (10).

6. Combined pressure limiting and overflow valve according to at least one of the preceding claims, **characterized in that** the piston (10) is embodied as a two-part piston (10a, 10b), which comprises a main piston (10a) and a ring (10b).

7. Combined pressure limiting and overflow valve according to Claim 6, **characterized in that** the ring (10b) is supported by an elastic element (70) so that it can tilt in relation to the main piston (10a).

8. Combined pressure limiting and overflow valve according to Claim 1 or 6, **characterized in that** the piston (10) or the main piston (10a) comprises a venting port (8).

9. Use of the combined pressure limiting and overflow valve according to at least one of the preceding claims in an air processing unit in a commercial vehicle.

## Revendications

1. Soupape de limitation de pression et de décharge combinée, en particulier pour une installation de traitement d'air dans un véhicule utilitaire, la soupape de limitation de pression et de décharge combinée (30) présentant un boîtier (18), un couvercle (19), une ouverture d'entrée (4), une première ouverture de sortie (7), un piston (10), un siège de soupape de décharge (1), un siège de soupape de limitation de pression (2) et un ressort d'ajustement (11),
**caractérisée en ce que**
le ressort d'ajustement (11) permet d'ajuster à la fois une pression d'ouverture et de fermeture du siège de soupape de décharge (1) ainsi qu'une pression d'ouverture et de fermeture du siège de soupape de limitation de pression (2).

2. Soupape de limitation de pression et de décharge combinée selon la revendication 1,
**caractérisée en ce que**
le piston (10) divise la soupape de limitation de pression et de décharge combinée (30) en un premier espace de pression (5) et un deuxième espace de pression (16), le premier espace de pression (5) pouvant être connecté à l'ouverture d'entrée (4) et à la première ouverture de sortie (7), et le deuxième espace de pression (16) étant en liaison avec l'atmosphère par le biais d'une ouverture de ventilation (9), entre le piston (10) et le boîtier (18) ou entre le piston (10) et le couvercle (19) étant disposé le ressort d'ajustement (11) de telle sorte que le piston (10) soit maintenu dans une position de repos par la force de ressort de ce ressort d'ajustement (11), le siège de soupape de décharge (1) étant fermé dans cette position de repos tandis que le siège de soupape de limitation de pression (2) est ouvert.

3. Soupape de limitation de pression et de décharge combinée selon la revendication 1 ou 2, **caractérisée en ce que** le ressort d'ajustement (11) peut être ajusté par une vis de réglage (15).

4. Soupape de limitation de pression et de décharge combinée selon la revendication 3, **caractérisée en ce qu'**entre le ressort d'ajustement (11) et la vis de réglage (15) est disposée une première coiffe de ressort (20).

5. Soupape de limitation de pression et de décharge combinée selon au moins l'une quelconque des revendications précédentes, **caractérisée en ce qu'**entre le ressort d'ajustement (11) et le piston (10) est disposée une deuxième coiffe de ressort (21).

6. Soupape de limitation de pression et de décharge combinée selon au moins l'une quelconque des revendications précédentes, **caractérisée en ce que** le piston (10) est réalisé sous forme de piston en deux parties (10a, 10b), qui comprend un piston principal (10a) et une bague (10b).

7. Soupape de limitation de pression et de décharge combinée selon la revendication 6, **caractérisée en ce que** la bague (10b) est montée de manière à pouvoir basculer par rapport au piston principal (10a) par le biais d'un élément élastique (70).

8. Soupape de limitation de pression et de décharge combinée selon la revendication 1 ou 6, **caractérisée en ce que** le piston (10) ou le piston principal (10a) présente un canal de ventilation (8).

9. Utilisation de la soupape de limitation de pression et de décharge combinée selon au moins l'une quelconque des revendications précédentes dans une installation de traitement d'air dans un véhicule utilitaire.
